# EUROPEAN PATENT SPECIFICATION

(11) **EP 4 204 352 B1**
(45) Date of publication and mention of the grant of the patent: **11.02.2026**
(21) Application number: 21745421.4
(22) Date of filing: 01.07.2021
(51) Int. Cl.: B66F 9/06, B66F 17/00, B66F 9/075, G05D 1/00

(54) **SAFETY DEVICE FOR SELF-PROPELLED INDUSTRIAL VEHICLES**
SICHERHEITSEINRICHTUNG FÜR SELBSTFAHRENDE INDUSTRIEFAHRZEUGE
DISPOSITIF DE SÉCURITÉ POUR VÉHICULES INDUSTRIELS AUTOMOTEURS

(30) Priority: 27.08.2020 IT 202000020572
(43) Date of publication of application: 05.07.2023
(73) Proprietor: Kiwitron S.r.l., 40037 Sasso Marconi (BO) (IT)
(72) Inventor: PETRELLI, Carlo, 40010 SALA BOLOGNESE (Bologna) (IT); PARAZZA, Daniele, 40032 CAMUGNANO (Bologna) (IT); FILIPPINI, Andrea, 40069 ZOAL PEDROSA (Bologna) (IT); FRONTALI, Federico, 40026 IMOLA (Bologna) (IT); FILIPPINI, Matteo, 40050 MONTE SAN PIETRO (Bologna) (IT)
(74) Representative: Scipioni, Luca
(86) International application number: PCT/IB2021/055919
(87) International publication number: WO 2022/043777

(56) References cited:
- WO-A1-2020/077481
- US-A1- 2020 024 114
- US-B2- 10 328 578

## Description

### Technical field

This invention relates to a safety device for self-propelled industrial vehicles and a method for controlling the movement of self-propelled industrial vehicles.

### Background art

In the sector of safety devices for industrial vehicles the need is increasingly felt to provide safety systems which prevent accidents between vehicles or the striking of personnel by the vehicles.

In this regard, anti-collision systems have been developed which are able to determine the distance of the vehicle from objects positioned along a direction of travel of the vehicle.

These systems usually use radio waves for determining the distances of the objects from the vehicle.

More specifically, solutions are known, such as those described in patent document EP3660231A1, in which the presence of one or more video cameras of the same type is described, configured for detecting images of a movable element of the vehicle and images of the surrounding environment. From the processing of the images it is possible to locate in space the objects, whose position is compared with a trajectory of the movable element, to check that there is no collision.

However, this solution is poor in terms of performance, since it does not allow the objects encountered in the trajectory to be distinguished.

There are also prior art solutions, such as those described in patent document WO2019125554A1, in which a video camera is used which determines the distance by determining the return time of the signal sent. These video cameras are, however, without a discrimination of the object identified.

Patent document CN107031629A describes, on the other hand, the use of a plurality of depth video cameras, located in various positions of the vehicle. Although this solution performs on the accurate determination of distances, it, however, fails with regard to the determination of the type of obstacle.

Other solutions are described in patent documents CN109969989A and US10538421B2.

However, these solutions, as well as the others, are also not able to allow a more efficient management of the movement system, since there is no access to refined data regarding the obstacles and therefore unable to provide logics for controlling the movement systems which are more efficient. Moreover, these solutions have a high incidence of false alarms, with a consequent reduction in operating efficiency.

Further solutions are also known which are described in the following documents: WO2020077481 A1 (which discloses the preamble of claims 1 and 8), US2020024114A1 and US1032857882.

### Aim of the invention

The aim of the invention is to provide a safety device and a method which overcome the above-mentioned drawbacks of the prior art.

Said aim is fully achieved by the safety device and the method according to the invention as characterised in the appended claims.

According to one aspect of this invention, the invention provides a safety device for a self-propelled industrial vehicle in an operating space.

The device comprises a measuring unit. The measuring group is configured to detect depth data, representative of a distance, from the measuring group, of bodies arranged in the operating space. The measuring unit comprises one or more depth video cameras.

According to an embodiment, the device comprises an additional measuring unit. The additional measuring unit is configured to detect image data, representing an image, preferably an RGB image, of the bodies positioned in the operating space.

The device comprises a control unit. The control unit can be connected to one or more movement actuators of the industrial vehicle. In other words, the control unit is connected in use to said one or more movement actuators.

The control unit is connected to the measuring unit to receive the depth data. The control unit is connected to the additional measuring unit to receive the image data.

According to an embodiment, the control unit is programmed to compare the image data with reference image data. This comparison allows the control unit to classify the bodies in predetermined categories (which are associated with image reference data).

According to an embodiment, the control unit is programmed to associate with each body a corresponding predetermined category and a corresponding value of distance from the self-propelled vehicle.

According to other embodiments of the invention, the device includes only one between the measuring unit and the additional measuring unit (that is, a single measuring unit), which detects only the depth data or the image data.

For this reason, according to an embodiment wherein only the measuring unit is present configured for measuring the depth data, the control unit is programmed for performing a first processing of the depth data for determining the depth of each pixel measured by the measuring unit. In addition, the control unit is programmed for performing a second processing of the depth data, comparing them with reference data, for classifying the bodies into the predetermined categories. For this reason, in that case, the identification (the classification) occurs directly on three-dimensional bodies, preferably without colour. In effect, by using *image detection* algorithms, for example *Point Cloud Image Detection,* the control unit is programmed to determine, as well as the depth, also the predetermined category to which the body belongs. For this reason, with one or more depth video cameras, the control device can identify both the type of body and its distance from the industrial vehicle.

On the other hand, according to a further embodiment, the device comprises only the additional measuring unit, that is, a measuring unit configured to determine image data (two-dimensional).

According to this embodiment, the measuring unit (additional) comprises a depth recognition module, configured to process the RGB image detected by the RGB video camera, to derive information regarding the depth of bodies captured in the image (which is a two-dimensional image).

For this reason, also in this case, with a single measuring unit, including one or more RGB video cameras which detect images with two-dimensional colours, the device can identify both the type of body and the distance of the body from the industrial vehicle.

According to the invention, the control unit has access to a limit distance value. The control unit is programmed to compare the distance (from the vehicle) of each body with the limit distance value.

The control unit is programmed to generate, based on said comparison, control signals, at distance values which are less than the limit distance value.

This therefore makes it possible to alert or perform actions if the vehicle gets too close to a body positioned in the operating space.

According to an embodiment, the limit distance value is variable depending on the predetermined category associated with each body in the operating space, to discriminate the generation of the control signals on the basis of the category identified.

This feature makes it possible to generate the control signals in a differentiated manner on the basis of the type of body which is close to the vehicle. In that way, the alarm can be activated for greater limit distances if the body is an operator and for smaller limit distances for bodies which are inanimate.

According to an embodiment, the control signals represent controls for activating an alert device of the self-propelled vehicle. This makes it possible to alert the user, in a audio, visual or vibrational manner, stimulating it to interrupt the forward movement of the self-propelled vehicle (or to change the direction of the self-propelled vehicle).

According to an embodiment, the control signals represent a control of said one or more vehicle movement actuators, in order to limit the movement of the vehicle. According to an embodiment, the control signals represent an activation of a brake of the actuators, to interrupt the forward movement of the vehicle. According to an embodiment, the control signals represent a diversion of a vehicle steering, to prevent the collision of the vehicle with the body.

According to an embodiment, said one or more depth video cameras include one or more of the following video cameras:
- depth camera with structured light;
- depth camera of the TOF type, which determines the depth based on the time of a distance signal;
- LIDAR, configured to transmit a laser beam and determine the distance based on the reflection of the bodies hit by the laser beam.

According to an embodiment, the measuring unit comprises a video camera which detects RGB images. According to this embodiment, the measuring unit comprises a depth recognition module, configured to process the RGB image detected by the RGB video camera, to derive information regarding the depth of the bodies captured in the image (which is a two-dimensional image).

According to an embodiment, the additional measuring unit comprises an RGB colour video camera.

According to an aspect of the invention, the control unit is programmed to associate the predetermined classes to each body by processing the image data according to one or more of the following methods:
- computer vision algorithm;
- RGB image neural network-based classification algorithm;
- PCODNN, Point Cloud Object Detection Neural Network based classification algorithm.

According to an aspect of the invention, a transporter trolley is provided, mobile in an operating space.

The transporter trolley comprises a moving interface, configured to come into contact with the ground when moving the trolley.

The transporter trolley comprises one or more moving actuators, connected to the moving interface to move it and allow the trolley to move forward.

The transporter trolley comprises a safety device according to any of the features described in the invention with reference to the safety device.

According to an aspect of the invention, the invention provides a method for moving an industrial vehicle.

The method comprises a step of detecting, by means of a measuring unit, depth data representative of a distance, from the measuring unit, of bodies arranged in an operating space.

The method comprises a step of detecting image data, representative of an image of the bodies located in the operating space, through an additional measuring unit.

The method comprises a step of receiving the depth data and/or the image data in a control unit of the industrial vehicle.

The method comprises a step of controlling one or more actuators for moving the industrial vehicle, using the control unit.

According to the invention, the method comprises a classification step, wherein the control unit compares the image data with reference image data, for classifying the bodies into predetermined categories. According to the invention, the method comprises an association step, wherein the control unit associates with each body a corresponding predetermined category and a corresponding value of distance from the self-propelled vehicle.

The method comprises an alarm step, wherein the control unit generates a notification to the user when the distance of at least one body is less than a limit distance value.

The method comprises a step of varying the limit distance value, wherein the control unit varies the limit distance value on the basis of the predetermined category associated with each body.

For this reason, the control unit receives the distance of the body from the vehicle and the category to which it belongs. Subsequently, it retrieves the value of the characteristic limit distance of said category and compares it with the value of the distance of the body from the vehicle. Based on the comparison, the control unit generates the control signals, to intervene if the distance is less than the limit distance value.

### Brief description of the drawings

These and other features will become more apparent from the following detailed description of a preferred embodiment, illustrated by way of nonlimiting example in the accompanying drawings, in which:

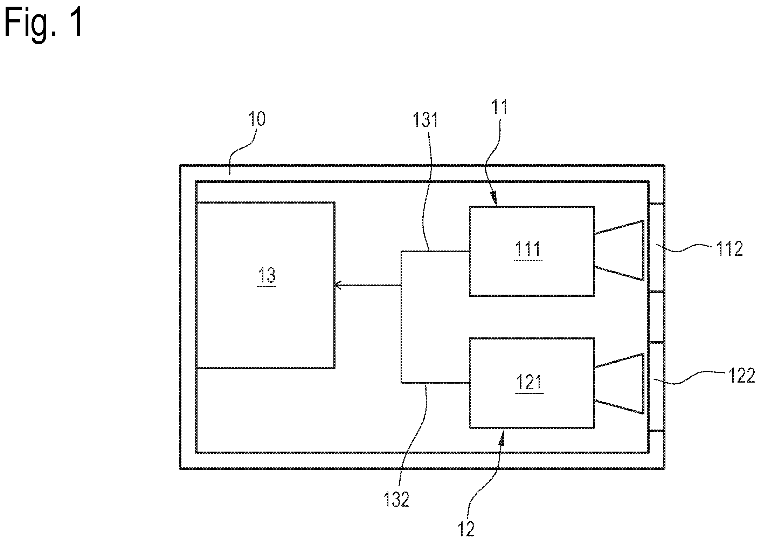

- Figure 1 illustrates a safety device for self-propelled industrial vehicles;

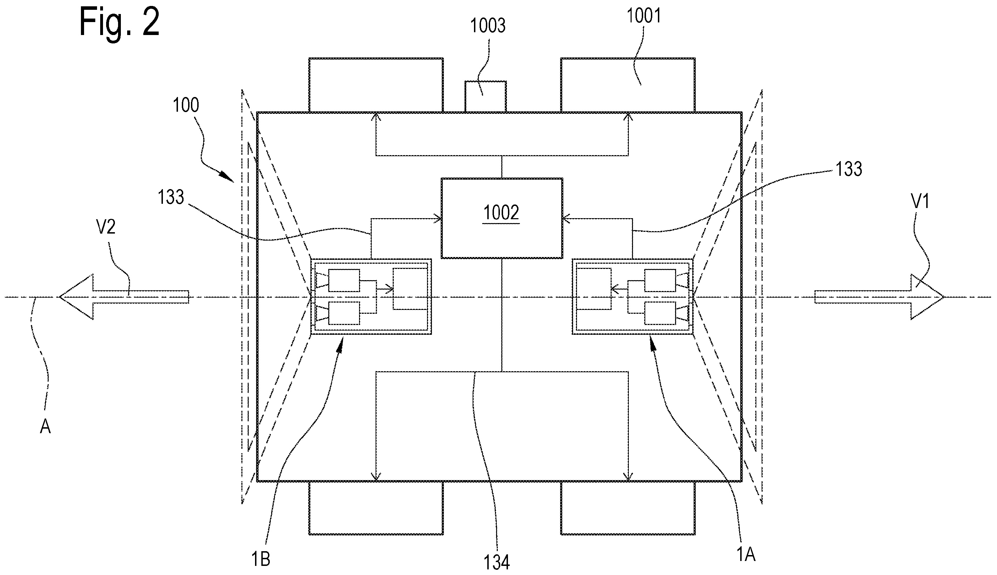

- Figure 2 shows a transporter trolley including at least one safety device of Figure 1;

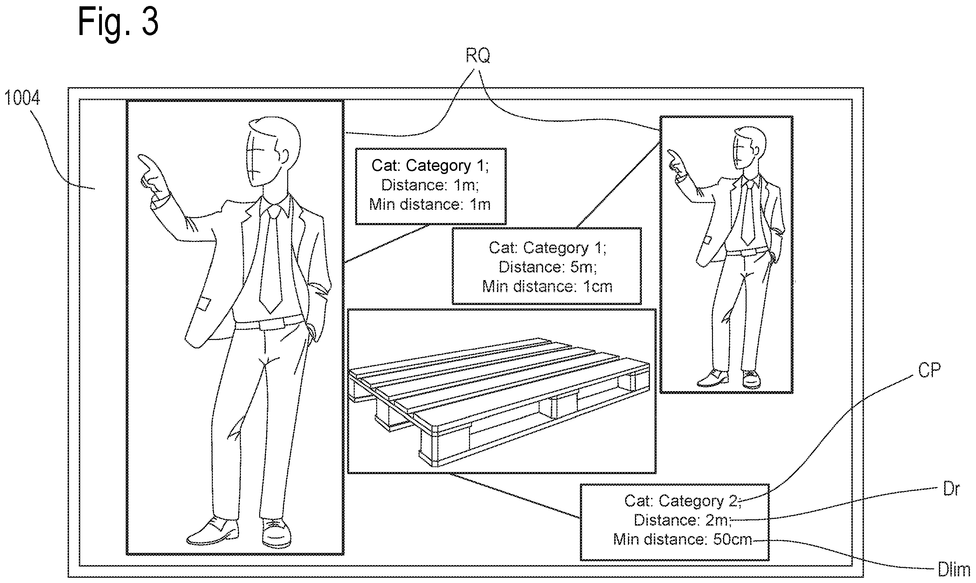

- Figure 3 schematically shows an embodiment of an output shown by video by the safety device of Figure 1;

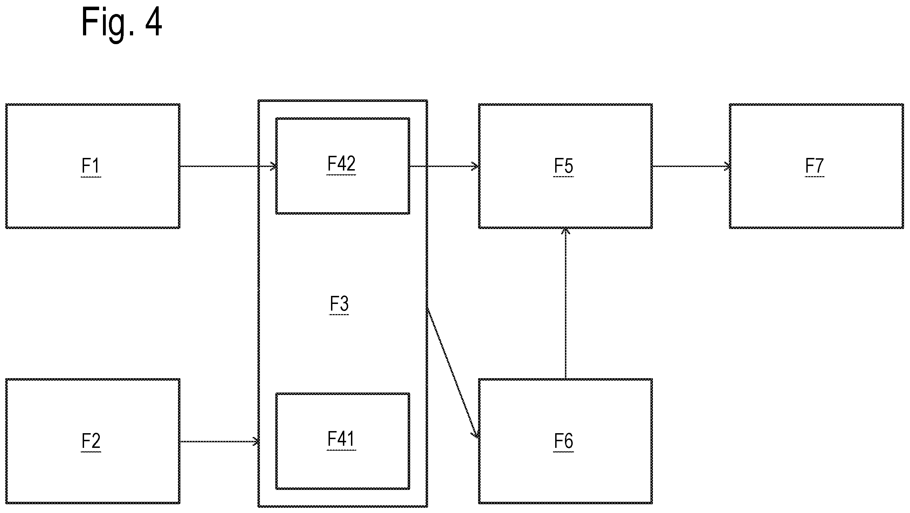

- Figure 4 shows the steps of a method for moving an industrial vehicle.

### Detailed description of preferred embodiments of the invention

With reference to the accompanying drawings, the numeral 1 denotes a safety device for an industrial vehicle 100, preferably self-propelled in an operating space.

The safety device 1 comprises an outer casing 10, which contains its components.

The safety device 1 comprises a measuring unit 11, configured to detect depth data 131, representative of a distance of bodies arranged in the operating space by the measuring unit 11.

The measuring unit 11 comprises at least one video camera 111, preferably a depth video camera 111, that is, programmed for measuring the distance of the bodies positioned in the operating space by the measuring unit 11. In a depth video camera, in general, the pixels of the image captured represent the distance of each pixel from the video camera.

Preferably, the depth video camera 111 is positioned in the casing 10 so as not to be damaged by external contacts. The depth video camera 111 faces an inspection opening 112, from which it can inspect the operating space positioned in its field of vision. The depth video camera 111 faces along a feed direction A, in a direction of forward movement V1, for detecting bodies positioned in the operating space which are potentially coincident with the trajectory of the industrial vehicle.

According to an embodiment, the depth video camera 111 is positioned in an end of forward movement 100A, 100B of the industrial vehicle, that is to say, the most advanced position of the vehicle, along the feed direction A in the direction of forward movement V1, or in a reverse direction V2. In fact, this allows an indication of the distance of the bodies which is directly indicative of the distance of the vehicle from the body.

According to this embodiment, in order to detect the entire operating space which can potentially collide with the vehicle, the depth video camera 111 has a field of vision of 180° to be able to also determine the bodies which are located at the most lateral visual angles.

According to other embodiments, the depth video camera 111 is positioned, relative to the end of forward movement 100°, 100B of the vehicle at a detection distance DR. The detection distance is calculated on the basis of the field of vision of the depth video camera 111, in such a way as to allow it to detect the bodies in the entire operating space passed through by the vehicle as it moves forward. This therefore allows working with visual fields of less than 180°, increasing the measuring distance DR.

It should be noted that the measuring unit 11 may comprise an additional depth video camera, to form a plurality of depth video cameras. These embodiments may be more expensive but the redundancy of the depth video cameras could provide advantages in terms of increased precision of the measurement.

The video camera 111 (depth) may be one of the following types of video cameras:
- a structured light depth chamber, configured for determining a depth map following the processing of infrared images obtained by capturing the object with a predetermined luminous pattern.
- TOF, Time Of Flight camera, configured to determine the distance map, based on the analysis of the variation of the wavelength reflected by the object, relative to the wavelength emitted.
- LIDAR, Light Detection and Ranging or Laser Imaging Detection and Ranging, configured to determine the distance of the bodies by emitting a laser pulse. The LIDAR is configured to determine the distance of the object by measuring the time passed between the emission of the laser pulse and the reception of the backscattered signal. The LIDAR comprises a laser source, that is, a coherent beam of light at a precise wavelength, sent towards the operating space.

According to an embodiment, the depth video camera 111 is an RGB video camera for capturing a colour image. According to this embodiment, the measuring unit 11 comprises a module for estimating the distances. The module for estimating distances is a computer vision algorithm (for example, a "depth estimation CNN" neural network) which makes it possible to obtain the map of the distances starting from the RGB image. The control unit receives the measurement distance and takes it into account in detecting the distance from the vehicle.

The safety unit 1 comprises an additional measuring unit 12, configured to detect image data 132, representative of a colour image of bodies arranged in the operating space.

The additional measuring unit 12 comprises at least one video camera 121, preferably an RGB video camera 121, that is to say, a video camera which detects a colour image of the operating space positioned in its field of vision.

Preferably, the RGB video camera 121 is positioned in the casing 10 so as not to be damaged by external contacts. The RGB video camera 121 faces an additional inspection opening 122, from which it can inspect the operating space positioned in its field of vision. The RGB video camera 121 faces along a feed direction A, in a direction of forward movement V1, for detecting bodies positioned in the operating space which are potentially coincident with the trajectory of the industrial vehicle.

According to an embodiment, the RGB video camera 121 is positioned in the end of forward movement 100A, 100B of the industrial vehicle.

According to this embodiment, in order to detect the entire operating space which can potentially collide with the vehicle, the RGB video camera 121 has a field of vision of 180° to be able to also determine the bodies which are located at the most lateral visual angles.

According to other embodiments, the RGB video camera 121 is positioned, relative to the end of forward movement 100°, 100B of the vehicle at a measuring distance DR', which may be the same detection distance DR of the depth video camera 111. The detection distance is calculated on the basis of the field of vision of the RGB video camera 121, in such a way as to allow it to detect the bodies in the entire operating space passed through by the vehicle as it moves forward. This therefore allows working with visual fields of less than 180°, increasing the measuring distance DR'.

It should be noted that the additional measuring unit 12 may comprise an additional RGB video camera, to form a plurality of RGB video cameras. These embodiments may be more expensive but the repeatability of the RGB video cameras could provide advantages in terms of completeness of the images detected.

According to an embodiment, the RGB video camera 121 and the depth video camera 111 are positioned, along the feed direction A, in a same position, to have a direct correlation of the image data 132 and the depth data 131. On the other hand, if the two video cameras (RGB 121 and depth 111) are spaced from each other along the feed direction A, for various design reasons, the depth data 131 and the image data 132 are correlated to suitably associate the distances detected to the colour image.

The device 1 comprises a control unit 13. The control unit 13 is connected to the measuring unit 11, to receive the depth data 131. The control unit 13 is connected to the additional measuring unit 12, to receive the image data 132.

The control unit 13 is programmed to control, directly or indirectly, one or more actuators 1001 of the industrial vehicle, designed for the forward movement and movement of the industrial vehicle 100. In fact, according to a first embodiment, the control unit 13 is connected to a control unit 1002 of the industrial vehicle 100, for sending control signals 133, representing at least the distance of the industrial vehicle 100 from the bodies positioned in the operating space. In this way, the control unit 1002 can control said one or more actuators 1001 of the industrial vehicle on the basis of the control signals 133 received.

According to other embodiments, the control unit 13 is connected directly to said one or more actuators 1001 of the industrial vehicle to send the control signals 133, which represent a dynamic behaviour of said one or more actuators 1001, to command them directly to stop or return to the forward movement of the vehicle 100.

According to an embodiment, the control unit 13 is programmed to generate the control signals 133 on the basis of the depth data 131 and/or on the basis of the image data 132.

More specifically, the control unit 13 is configured to receive from the depth video camera 111 a plurality of pixel-distance pairs, wherein each pixel is associated at a respective distance from the depth video camera 111.

Moreover, the control unit 13 is programmed to process the image data 132 for deriving further information. More specifically, the control unit 13 is programmed to group together the image data 132, associating with each group of image data a corresponding predetermined category CP between a plurality of predetermined categories. In other words, the control unit 13 is programmed to recognise the type of bodies positioned in the operating space based on the image data 132.

For this reason, each group of image data which defines a body in the RGB image detected will be associated with a category which identifies the type of body. For example, but without limiting the scope of the invention, the categories may be one or more of the following: human, fixed machine, another industrial vehicle in motion, another industrial vehicle stationary, pallet, shelving, wall.

It should be noted that the image data 132 can represent a two-dimensional graphical representation of the operating space or a three-dimensional graphical representation of the operating space, for example *a "point cloud",* that is to say, a list of points of an object or a scene defined by specific Cartesian or polar coordinates (or of any other type).

The control unit 13 is programmed to process the image data 132 according to one or more of the following algorithms known to an expert in the field, specialised in processing images:
- ODNN, Object Detection Neural Network, configured to group the image data 132 into groups that define corresponding rectangles (or squares) on the original image, each rectangle identifying a corresponding body in the operating space;
- PCODNN, Point Cloud Object Detection Neural Network, configured to identify the type of objects directly from the three-dimensional representation (point cloud) by means of neural network.

For this reason, at the end of the processing process, the control unit 13 has access to groups of image data 132, each associated with a specific category.

The control unit 13 is programmed to associate to each image data a corresponding value of distance from the industrial vehicle 100, on the basis of the depth data 131 received.

For this reason, the control unit 13 (after processing), has access, for each pixel of the RGB image, to a pair of values, wherein the first value is the distance value in real time and wherein the second value is the predetermined category CP to which said pixel belongs.

With said data available, the control unit 13 is programmed to control that the industrial vehicle 100 does not get too close to the bodies of the operating space, according to predetermined criteria.

The control unit 13 is programmed for recovering, for each pixel, a limit distance value Dlim, on the basis of the predetermined category with which the pixel is associated. In other words, the safety device 1 comprises a memory, in which, for each predetermined category CP, a limit distance value Dlim is saved. The control unit 13 is configured to access the memory with the predetermined category of each pixel and to pick up the limit distance value Dlim associated with said category CP.

For this reason, following said recovery, the control unit 13 comprises a trio of values for each pixel of the image (or for each of said image data 132): the distance value Dr, preferably in real time, of the portion of the body represented by the pixel relative to the industrial vehicle, its predetermined category CP and the corresponding limit distance value Dlim.

The control unit 13 is programmed for comparing the limit distance value with the predetermined distance value in real time.

The control unit 13 is programmed for generating control signals 133, on the basis of said comparison between the limit distance value with the predetermined distance value in real time. More specifically, the control unit is configured for generating the control signals 133 for instructing said one or more actuators 1001 of the industrial vehicle 100 (or the control unit 1002 of the industrial vehicle 100) to continue the movement for distance values greater than the limit distance value. The control unit is configured for generating the control signals 133 for instructing said one or more actuators 1001 of the industrial vehicle 100 (or the control unit 1002 of the industrial vehicle 100) to interrupt the movement for distance values less than or equal to the limit distance value. In addition or alternatively, the control unit 13 is configured to generate the control signals 133 for instructing an alarm unit 1003 of the industrial vehicle 100 (or the control unit 1002 of the industrial vehicle 100) to emit an alarm signal for distance values less than or equal to the limit distance value. The alarm signal might be, merely by way of example, an audio alarm, a luminous alarm or a vibration of the steering.

According to an aspect of the invention, a transporter trolley 100 is provided, self-propelled in the operating space.

The transporter trolley 100 comprises one or more movement actuators 1001, configured to move an interface for contact with the ground, which may be a simple rubber wheel, a tracked wheel or other types.

The transporter trolley 100 comprises a control unit 1002, configured to control the movement of the trolley 100. More specifically, the control unit 1002 is connected to said one or more movement actuators 1001, for sending control signals 134, for instructing them to move the trolley 100. The trolley 100 comprises one or more movement tools, configured for picking up, holding and/or releasing goods.

According to an embodiment, the trolley 100 comprises a safety device 1 according to one or more of the features described in the invention. According to an embodiment, the trolley 100 comprises a plurality of control devices 1 according to one or more of the features described in the invention.

According to an embodiment, the control unit 13 of the device 1 coincides with the control unit 1002 of the transporter trolley 100, whilst according to other embodiments there are two different control units, wherein the control unit 13 generates the control signals 133 and wherein the control unit 1002 generates the control signals 134 on the basis of the control signals 133.

The device 1 is positioned, on the transporter trolley 100, in a detection position, which may protrude from the trolley 100, located at one end of the trolley or located in a position inside the trolley 100, at a detection distance DR from the trolley 100.

According to an embodiment, the device 1 is configured to inspect the operating space in front of the transporter trolley 100, along the feed direction A in the direction of forward movement V1.

In that sense, there is the problem of having to take into consideration the direction of forward movement of the vehicle, which can also proceed backwards.

For this purpose, two embodiments are provided. According to a first embodiment, the trolley comprises a first device 1A, designed for detecting obstacles in front of the vehicle along the feeding direction A, in the direction of forward movement V1, and a second device 1B, designed for detecting obstacles in the operating space in front of the vehicle along the feeding direction A, in the reverse direction V2.

According to this embodiment, the control unit 1002 is programmed to receive direction data, representing the direction in which the trolley 100 is proceeding. For this reason, the control unit 1002 is programmed to receive the control signals 133 from the first device 1° or from the second device 1B on the basis of the direction data. In that way, when the vehicle is moving forward, the control unit 1002 receives the control signals 133 from the first device 1°, which detects in the direction of forward movement V1, whilst, when the vehicle is reversing, the control unit 1002 receives the control signals 133 from the second device 1B, which detects the direction of reversal V2.

According to a second embodiment, the trolley 100 comprises a single control device 1. The trolley 100 comprises a rotary support, which is configured to support the control device 1 in its detection position. The rotary support rotates about an adjustment axis substantially parallel to the direction of the weight force.

The control unit 1002 is connected to the rotary support for controlling it in its rotation about the adjustment axis. The control unit 1002 is configured to rotate the rotary support on the basis of the direction data, representing the direction along which the trolley 100 is moving. In other words, the control unit is programmed to rotate the rotary support, and therefore the control device 1, to keep it aligned with the feeding direction and with the video cameras looking in the direction of movement of the trolley 100.

Therefore, according to this embodiment, when the trolley 100 moves forward the rotary support has a zero angle of rotation whilst, when the trolley 100 reverses, the rotary support has an angle of rotation equal to 180°.

According to an embodiment, the trolley 100 comprises a display unit 1004, on which are shown output of the safety device 1. More specifically, the operating space positioned in front of the trolley, in the direction of forward movement V1, is shown on the display 1004 in real time. With the safety device 1 enabled, the display 1004 shows one or more boxes RQ, each of which corresponds to a specific body which is identified by the control unit 13 of the device 1 processing the RGB image detected by the RGB video camera. If necessary, for each of the boxes RQ, information may also be shown on the display regarding the distance of the body from the device 1, the acceptable limit distance for said type of bodies and the category of bodies to which the body belongs.

According to an aspect of the invention, a method is provided for detecting obstacles in the movement of an industrial vehicle 100 in an operating space.

The method comprises a first measuring step F1, wherein a measuring unit 11 measures depth data 131, representing a distance of bodies located in the operating space from the measuring unit 11.

In the first measuring step, a depth video camera 111 of the measuring unit 11 faces an inspection opening 112, for inspecting the operating space located in its field of vision. In the first measuring step, the depth video camera 111 is positioned facing along a feed direction A, in a direction of forward movement V1, for detecting bodies positioned in the operating space which are potentially coincident with the trajectory of the industrial vehicle.

The first measuring step may also be performed using a plurality of depth video cameras.

According to an embodiment, wherein the depth video camera 111 is an RGB video camera for measuring a colour image, a module for estimating the distances of the measuring unit 11 determines a map of the distances starting from the RGB image by means of a computer vision algorithm.

The method comprises a second measuring step, wherein an additional measuring unit 12 detects image data 132, representing a colour image of the bodies positioned in the operating space. The second measuring step is performed by a video camera 121, preferably an RGB video camera 121, that is to say, a video camera which detects a colour image of the operating space positioned in its field of vision.

The RGB video camera 121 is positioned facing an additional inspection opening 122, from which it can inspect the operating space positioned in its field of vision. The RGB video camera 121 is positioned facing along a feed direction A, in a direction of forward movement V1, for detecting bodies positioned in the operating space which are potentially coincident with the trajectory of the industrial vehicle.

According to an embodiment, the second measuring step F2 may be performed with a plurality of RGB video cameras.

The method comprises a control step, wherein a control unit 13 controls the device 1. The control unit 13 receives the depth data 131. The control unit receives the image data 132.

The control unit 13 controls, directly or indirectly, one or more actuators 1001 of the industrial vehicle, designed for the forward movement and movement of the industrial vehicle 100. In fact, according to a first embodiment, the control unit 13 sends to a control unit 1002 of the industrial vehicle 100, control signals 133, representing at least the distance of the industrial vehicle 100 from the bodies positioned in the operating space.

According to other embodiments, the control unit 13 sends the control signals 133, which represent a dynamic behaviour of said one or more actuators 1001, for controlling them directly to stop or return to the forward movement of the vehicle 100.

According to an embodiment, the control unit 13 generates the control signals 133 on the basis of the depth data 131 and/or on the basis of the image data 132.

More specifically, the control unit 13 receives from the depth video camera 111 a plurality of pixel-distance pairs, wherein each pixel is associated at a respective distance from the depth video camera 111.

The method comprises a classification step F3. The classification step comprises a processing step F41, wherein the control unit 13 processes the image data 132 to derive further information. More specifically, the control unit 13 groups together the image data 132, associating with each group of image data a corresponding predetermined category CP between a plurality of predetermined categories. In other words, the control unit 13 recognises the type of bodies positioned in the operating space based on the image data 132.

For this reason, the classifying step F3 comprises an association step F42 wherein each group of image data defining a body in the captured RGB image is associated with a predetermined category CP identifying the type of body.

The control unit 13 processes the image data 132 according to one or more of the following algorithms known to an expert in the field, specialised in processing images:
- ODNN, Object Detection Neural Network, configured to group the image data 132 into groups that define corresponding rectangles (or squares) on the original image, each rectangle identifying a corresponding body in the operating space;
- PCODNN, Point Cloud Object Detection Neural Network, configured to identify the type of objects directly from the three-dimensional representation (point cloud) by means of neural network.

For this reason, at the end of the processing process, the control unit 13 has access to groups of image data 132, each associated with a specific category.

The control unit 13 associates to each image data a corresponding value of distance from the industrial vehicle 100, on the basis of the depth data 131 received.

For this reason, the control unit 13 (after processing), accesses, for each pixel of the RGB image, to a pair of values, wherein the first value is the distance value in real time and wherein the second value is the predetermined category CP to which said pixel belongs.

With said data available, the control unit 13 controls that the industrial vehicle 100 does not get too close to the bodies of the operating space, according to predetermined criteria.

The method comprises a limit distance recovery step F6, wherein the control unit 13 recovers, for each pixel, a limit distance value Dlim, based on the predetermined category to which the pixel is associated. The control unit 13 accesses the memory with the predetermined category CP of each pixel and picks up the limit distance value Dlim associated with said category CP.

For this reason, following said recovery F6, the control unit 13 comprises a trio of values for each pixel of the image (or for each of said image data 132): the distance value Dr, preferably in real time, of the portion of the body represented by the pixel relative to the industrial vehicle, its predetermined category CP and the corresponding limit distance value Dlim.

The method comprises a comparison step F5, wherein the control unit 13 compares the limit distance value with the distance value determined in real time.

The method comprises a control step F7, wherein the control unit 13 generates control signals 133, on the basis of said comparison between the limit distance value with the distance value determined in real time. More specifically, the control unit generates the control signals 133 for instructing said one or more actuators 1001 of the industrial vehicle 100 (or the control unit 1002 of the industrial vehicle 100) to continue the movement for distance values greater than the limit distance value. The control unit generates the control signals 133 for instructing said one or more actuators 1001 of the industrial vehicle 100 (or the control unit 1002 of the industrial vehicle 100) to interrupt the movement for distance values less than or equal to the limit distance value. In addition or alternatively, the control unit 13 generates the control signals 133 for instructing an alarm unit 1003 of the industrial vehicle 100 (or the control unit 1002 of the industrial vehicle 100) to emit an alarm signal for distance values less than or equal to the limit distance value. The alarm signal might be, merely by way of example, an audio alarm, a luminous alarm or a vibration of the steering.

According to an aspect of the invention, the invention provides a method for controlling the movement of a transporter trolley 100, which moves in the operating space.

The method comprises a step of moving an interface for contact with the ground using one or more movement actuators 1001.

The method comprises a control step, wherein a control unit 1002, controls the movement of the trolley 100. More specifically, the control unit 1002 sends control signals 134 to said one or more movement actuators 1001, for instructing them to move the trolley 100.

The method comprises a step of moving goods, wherein one or more movement tools pick up, hold and/or release goods.

The method comprises one or more of the steps of the method for detecting obstacles in the movement of a transporter trolley 100.

According to an embodiment, the device 1 inspects the operating space in front of the transporter trolley 100, along the feed direction A in the direction of forward movement V1.

According to an embodiment, the detection of obstacles is performed both by a first device 1A, which detects obstacles in the operating space front of the vehicle along the feeding direction A, in the direction of forward movement V1, and a second device 1B, which detects obstacles in the operating space in front of the vehicle along the feeding direction A, in the reverse direction V2.

According to this embodiment, the control unit 1002 receives direction data, representing the direction in which the trolley 100 is proceeding. For this reason, the control unit 1002 receives the control signals 133 from the first device 1° or from the second device 1B on the basis of the direction data. In that way, when the vehicle is moving forward, the control unit 1002 receives the control signals 133 from the first device 1°, which detects in the direction of forward movement V1, whilst, when the vehicle is reversing, the control unit 1002 receives the control signals 133 from the second device 1B, which detects the direction of reversal V2.

According to a second embodiment of the method, the trolley 100 comprises a rotary support, which supports the control device 1 in its measuring position. The rotary support rotates about an adjustment axis substantially parallel to the direction of the weight force.

The control unit 1002 is connected (electronically) to the rotary support for controlling it in its rotation about the adjustment axis. The control unit 1002 is configured to rotates the rotary support on the basis of the direction data, representing the direction along which the trolley 100 is moving. In other words, the control unit rotates the rotary support, and therefore the control device 1, to keep it aligned with the feeding direction and with the video cameras looking in the direction of movement of the trolley 100.

Therefore, according to this embodiment, when the trolley 100 moves forward the rotary support has a zero angle of rotation whilst, when the trolley 100 reverses, the rotary support has an angle of rotation equal to 180°.

According to an embodiment, the method comprises a step of providing outputs, showing on a display unit 1004 in one or more boxes RQ, each of which corresponds to a specific body which is identified by the control unit 13 of the device 1 processing the RGB image detected by the RGB video camera. **If** necessary, for each of the boxes RQ, information may also be shown on the display regarding the distance of the body from the device 1, the acceptable limit distance for said type of bodies and the category of bodies to which the body belongs.

## Claims

1. Safety device (1) for a self-propelled industrial vehicle (100) movable in an operating space, including:
- a measuring group (11), configured to detect depth data (131), representative of a distance, from the measuring group (11), of bodies arranged in the operating space;
- an additional measuring group (12), configured to detect image data (132), representative of an image of bodies arranged in the operating space;
- a control unit (13), connectable to one or more actuators (1001) of the industrial vehicle (100) and connected to the measuring group (11) and the additional measuring group (12) to receive the depth data (131) and the image data (132),
wherein the control unit (13) is programmed to compare the image data (132) with reference image data, to classify bodies in predefined categories (CP) and where the control unit (13) is programmed to associate to each body a corresponding predefined category (CP) and a corresponding distance value (Dr) from the self-propelled vehicle, **characterized by** the fact that the control unit (13) has access to a limit distance value (Dlim) and in which the control unit (13) is programmed to compare the distance (Dr) of each body with the limit distance value (Dlim) and to generate, on the basis of this comparison, command signals (133), at lower distance values (Dr) than the limit distance value (Dlim).

2. Safety device (1) according to claim 1, in which the limit distance value (Dlim) is variable according to the predefined category (CP) associated with each body in the operating space, to discriminate the generation of the command signals (133) based on the predefined category (CP) identified.

3. Safety device (1) according to claim 1 or 2, in which the command signals (133) are representative of controls of one or more of the following activities:
- activation of an alarm group (1003) of the commercial vehicle (100), to warn the user to stop a progress of the commercial vehicle (100);
- control of one or more movement actuators (1001) of the industrial vehicle (100), to limit the movement of the vehicle (100).

4. Safety device (1) according to any of the preceding claims, in which the measurement group includes one or more of the following characteristics:
- depth camera (111) with structured light;
- depth camera (111) of the TOF type, which determines the depth based on the time of a distance signal;
- LIDAR, configured to transmit a laser beam and determine the distance based on the reflection of the bodies hit by the laser beam.

5. Safety device (1) according to any of the preceding claims, in which the additional measuring group (12) includes RGB colour camera (121).

6. Safety device (1) according to any of the preceding claims, in which the control unit (13) is programmed to associate the predefined classes to each body by processing the image data (132) according to one or more of the following methods:
- computer vision algorithm;
- RGB image neural network-based classification algorithm;
- PCODNN, Point Cloud Object Detection Neural Network based classification algorithm.

7. Transporter cart (100) mobile in an operating space, including:
- a moving interface, configured to come into contact with the ground when moving the trolley (100);
- one or more moving actuators (1001), connected to the moving interface to move it and allow the trolley to move forward (100);
- a safety device (1) according to any of the preceding claims.

8. Method for detecting obstacles in the handling of an industrial vehicle, including the following steps:
- detecting, by means of a measuring group (11), of depth data (131), representative of a distance, from the measuring group (11), of bodies arranged in an operating space;
- acquiring image data (132), representative of an image of the bodies disposed in the operating space, through an additional measuring group (12);
- receiving the depth data (131) and the image data (132) in a control unit (13) of the industrial vehicle (100);
- control of one or more movement actuators (1001) of the industrial vehicle (100), through the control unit (13);
- -classification, in which the control unit (13) compares the image data (132) with reference image data, to classify the bodies in predefined categories (CP),
- associating, in which the control unit (13) associates to each body a corresponding predefined category (CP) and a corresponding distance value (Dr) from the commercial vehicle (100),
**characterized by** the fact of including a step where the control unit (13) has access to a limit distance value (Dlim) and in which the control unit (13) compares the distance (Dr) of each body with the limit distance value (Dlim) and generates, on the basis of this comparison, command signals (133), at lower distance values (Dr) than the limit distance value (Dlim).

9. Method according to claim 8, including an alarm phase, in which the control unit (13) generates a notification to the user when the distance (Dr) of at least one body is less than a limit distance value (Dlim).

10. Method according to claim 8 or 9, including a step of variation of the limit distance value (Dlim), in which the control unit (13) varies the limit distance value (Dlim) based on the default category (CP) associated with each body.

## Patentansprüche

1. Sicherheitseinrichtung (1) für ein selbstfahrendes Industriefahrzeug (100), das in einem Betriebsraum beweglich ist, einschließend:
- eine Messgruppe (11), die so ausgelegt ist, dass sie Tiefendaten (131) erfasst, die für einen Abstand von der Messgruppe (11) zu im Betriebsraum angeordneten Körpern repräsentativ sind;
- eine zusätzliche Messgruppe (12), die so ausgelegt ist, dass sie Bilddaten (132) erfasst, die für ein Bild von im Betriebsraum angeordneten Körpern repräsentativ sind;
- eine Steuereinheit (13), die mit einem oder mehreren Aktuatoren (1001) des Industriefahrzeugs (100) verbindbar ist und mit der Messgruppe (11) und der zusätzlichen Messgruppe (12) verbunden ist, um die Tiefendaten (131) und die Bilddaten (132) zu empfangen, wobei die Steuereinheit (13) so programmiert ist, dass sie die Bilddaten (132) mit Referenzbilddaten vergleicht, um Körper in vordefinierte Kategorien (CP) zu klassifizieren, und wobei die Steuereinheit (13) so programmiert ist, dass sie jedem Körper eine entsprechende vordefinierte Kategorie (CP) und einen entsprechenden Abstandswert (Dr) vom selbstfahrenden Fahrzeug zuordnet,
**dadurch gekennzeichnet, dass** die Steuereinheit (13) Zugriff auf einen Grenzwert für den Abstand (Dlim) hat und wobei die Steuereinheit (13) so programmiert ist, dass sie den Abstand (Dr) jedes Körpers mit dem Grenzwert für den Abstand (Dlim) vergleicht und auf der Grundlage dieses Vergleichs bei Abstandswerten (Dr), die kleiner sind als der Grenzwert für den Abstand (Dlim), Befehlssignale (133) erzeugt.

2. Sicherheitseinrichtung (1) nach Anspruch 1, wobei der Grenzwert für den Abstand (Dlim) entsprechend der vordefinierten Kategorie (CP), die jedem Körper im Betriebsraum zugeordnet ist, variabel ist, um die Erzeugung der Befehlssignale (133) auf der Grundlage der identifizierten vordefinierten Kategorie (CP) zu unterscheiden.

3. Sicherheitseinrichtung (1) nach Anspruch 1 oder 2, wobei die Befehlssignale (133) für die Steuerung einer oder mehrerer der folgenden Aktivitäten repräsentativ sind:
- Aktivieren einer Alarmgruppe (1003) des Nutzfahrzeugs (100), um den Benutzer zu warnen, den Betrieb des Industriefahrzeugs (100) zu stoppen;
- Steuern eines oder mehrerer Bewegungsaktuatoren (1001) des Industriefahrzeugs (100), um die Bewegung des Fahrzeugs (100) zu begrenzen.

4. Sicherheitseinrichtung (1) nach einem der vorhergehenden Ansprüche, wobei die Messgruppe eine oder mehrere der folgenden Eigenschaften einschließt:
- Tiefenkamera (111) mit strukturiertem Licht;
- Tiefenkamera (111) vom Typ ToF, die die Tiefe anhand der Zeit eines Abstandssignals bestimmt;
- LIDAR, der so ausgelegt ist, dass er einen Laserstrahl aussendet und den Abstand anhand der Reflexion der vom Laserstrahl getroffenen Körper bestimmt.

5. Sicherheitseinrichtung (1) nach einem der vorhergehenden Ansprüche, wobei die zusätzliche Messgruppe (12) eine RGB-Farbkamera (121) einschließt.

6. Sicherheitseinrichtung (1) nach einem der vorhergehenden Ansprüche, wobei die Steuereinheit (13) so programmiert ist, dass sie die vordefinierten Klassen jedem Körper zuordnet, indem sie die Bilddaten (132) gemäß einem oder mehreren der folgenden Verfahren verarbeitet:
- Computer Vision-Algorithmus;
- aus RGB-Bild auf einem neuronalen Netz basierender Klassifizierungsalgorithmus;
- auf einem neuronalen Netz zur Erkennung von Punktwolken-Objekten (PCODNN) basierender Klassifizierungsalgorithmus.

7. Transportwagen (100), der in einem Betriebsraum beweglich ist, einschließend:
- eine Bewegungsschnittstelle, die so konfiguriert ist, dass sie beim Bewegen des Wagens (100) mit dem Boden in Kontakt kommt;
- einen oder mehrere Bewegungsaktuatoren (1001), die mit der Bewegungsschnittstelle verbunden sind, um diese zu bewegen und den Wagen vorwärts zu bewegen (100);
- eine Sicherheitseinrichtung (1) nach einem der vorhergehenden Ansprüche.

8. Verfahren zum Erkennen von Hindernissen bei der Handhabung eines Industriefahrzeugs, einschließend die folgenden Schritte:
- Erfassen mittels einer Messgruppe (11) von Tiefendaten (131), die für einen Abstand von der Messgruppe (11) zu in einem Betriebsraum angeordneten Körpern repräsentativ sind;
- Erfassen von Bilddaten (132), die für ein Bild der im Betriebsraum angeordneten Körper repräsentativ sind, durch eine zusätzliche Messgruppe (12);
- Empfangen der Tiefendaten (131) und der Bilddaten (132) in einer Steuereinheit (13) des Industriefahrzeugs (100);
- Steuern eines oder mehrerer Bewegungsaktuatoren (1001) des Industriefahrzeugs (100) durch die Steuereinheit (13);
- Klassifizieren, wobei die Steuereinheit (13) die Bilddaten (132) mit Referenzbilddaten vergleicht, um die Körper in vordefinierte Kategorien (CP) zu klassifizieren,
- Zuordnen, wobei die Steuereinheit (13) jedem Körper eine entsprechende vordefinierte Kategorie (CP) und einen entsprechenden Abstandswert (Dr) vom Nutzfahrzeug (100) zuordnet,
**dadurch gekennzeichnet, dass** es einen Schritt einschließt, in dem die Steuereinheit (13) Zugriff auf einen Grenzwert für den Abstand (Dlim) hat und wobei die Steuereinheit (13) den Abstand (Dr) jedes Körpers mit dem Grenzwert für den Abstand (Dlim) vergleicht und auf der Grundlage dieses Vergleichs bei Abstandswerten (Dr), die kleiner sind als der Grenzwert für den Abstand (Dlim), Befehlssignale (133) erzeugt.

9. Verfahren nach Anspruch 8, einschließend eine Alarmphase, in der die Steuereinheit (13) eine Meldung an den Benutzer erzeugt, wenn der Abstand (Dr) mindestens eines Körpers kleiner ist als ein Grenzwert für den Abstand (Dlim).

10. Verfahren nach Anspruch 8 oder 9, einschließend einen Schritt zum Variieren des Grenzwerts für den Abstand (Dlim), wobei die Steuereinheit (13) den Grenzwert für den Abstand (Dlim) anhand der jedem Körper zugeordneten Standardkategorie (CP) variiert.

## Revendications

1. Dispositif de sécurité (1) pour véhicules industriels automoteurs (100) mobiles dans un espace de fonctionnement, incluant :
- un groupe de mesure (11), configuré pour détecter des données de profondeur (131), représentatives d'une distance, à partir du groupe de mesure (11), de corps agencés dans l'espace de fonctionnement ;
- un groupe de mesure supplémentaire (12), configuré pour détecter des données d'image (132), représentatives d'une image de corps agencés dans l'espace de fonctionnement ;
- une unité de contrôle (13), reliable à un ou plusieurs actionneurs (1001) du véhicule industriel (100) et reliée au groupe de mesure (11) et au groupe de mesure supplémentaire (12) pour recevoir les données de profondeur (131) et les données d'image (132),
dans lequel l'unité de contrôle (13) est programmée pour comparer les données d'image (132) avec des données d'image de référence, pour classer les corps dans des catégories prédéfinies (CP) et dans lequel l'unité de contrôle (13) est programmée pour associer à chaque corps une catégorie prédéfinie correspondante (CP) et une valeur de distance correspondante (Dr) du véhicule automoteur,
**caractérisé en ce que** l'unité de contrôle (13) a accès à une valeur de distance limite (Dlim) et dans lequel l'unité de contrôle (13) est programmée pour comparer la distance (Dr) de chaque corps à la valeur de distance limite (Dlim) et pour générer, sur la base de cette comparaison, des signaux de commande (133), à des valeurs de distance (Dr) inférieures à la valeur de distance limite (Dlim).

2. Dispositif de sécurité (1) selon la revendication 1, dans lequel la valeur de distance limite (Dlim) est variable en fonction de la catégorie prédéfinie (CP) associée à chaque corps dans l'espace de fonctionnement, pour différencier la génération des signaux de commande (133) sur la base de la catégorie prédéfinie (CP) identifiée.

3. Dispositif de sécurité (1) selon la revendication 1 ou 2, dans lequel les signaux de commande (133) sont représentatifs des contrôles d'une ou plusieurs des activités suivantes :
- activation d'un groupe d'alarme (1003) du véhicule utilitaire (100), pour avertir l'utilisateur d'arrêter une progression du véhicule utilitaire (100) ;
- contrôle d'un ou plusieurs actionneurs de mouvement (1001) du véhicule industriel (100), pour limiter le mouvement du véhicule (100).

4. Dispositif de sécurité (1) selon l'une quelconque des revendications précédentes, dans lequel le groupe de mesure inclut une ou plusieurs des caractéristiques suivantes :
- caméra de profondeur (111) avec lumière structurée ;
- caméra de profondeur (111) de type TOF, qui détermine la profondeur sur la base du temps d'un signal de distance ;
- LIDAR, configuré pour transmettre un faisceau laser et déterminer la distance sur la base de la réflexion des corps touchés par le faisceau laser.

5. Dispositif de sécurité (1) selon l'une quelconque des revendications précédentes, dans lequel le groupe de mesure supplémentaire (12) inclut une caméra couleur RVB (121).

6. Dispositif de sécurité (1) selon l'une quelconque des revendications précédentes, dans lequel l'unité de contrôle (13) est programmée pour associer les classes prédéfinies à chaque corps en traitant les données d'image (132) selon un ou plusieurs des procédés suivants :
- algorithme de vision par ordinateur ;
- algorithme de classification basé sur le réseau neuronal d'image RVB ;
- algorithme de classification basé sur le réseau neuronal de détection d'objets dans un nuage de points, PCODNN.

7. Chariot de transport (100) mobile dans un espace de fonctionnement, incluant :
- une interface mobile, configurée pour entrer en contact avec le sol lors du déplacement du chariot (100) ;
- un ou plusieurs actionneurs mobiles (1001), reliés à l'interface mobile pour la déplacer et permettre au chariot de se déplacer vers l'avant (100) ;
- un dispositif de sécurité (1) selon l'une quelconque des revendications précédentes.

8. Procédé de détection d'obstacles dans la manutention d'un véhicule industriel, incluant les étapes suivantes :
- détecter, au moyen d'un groupe de mesure (11), des données de profondeur (131), représentatives d'une distance, à partir du groupe de mesure (11), de corps agencés dans un espace de fonctionnement ;
- acquérir des données d'image (132), représentatives d'une image des corps agencés dans l'espace de fonctionnement, par l'intermédiaire d'un groupe de mesure supplémentaire (12) ;
- recevoir les données de profondeur (131) et les données d'image (132) dans une unité de contrôle (13) du véhicule industriel (100) ;
- contrôler un ou plusieurs actionneurs de mouvement (1001) du véhicule industriel (100), par l'intermédiaire de l'unité de contrôle (13) ;
- classer, dans lequel l'unité de contrôle (13) compare les données d'image (132) avec des données d'image de référence, pour classer les corps dans des catégories prédéfinies (CP),
- associer, dans lequel l'unité de contrôle (13) associe à chaque corps une catégorie prédéfinie correspondante (CP) et une valeur de distance correspondante (Dr) du véhicule utilitaire (100),
**caractérisé par** le fait d'inclure une étape où l'unité de contrôle (13) a accès à une valeur de distance limite (Dlim) et dans lequel l'unité de contrôle (13) compare la distance (Dr) de chaque corps avec la valeur de distance limite (Dlim) et génère, sur la base de cette comparaison, des signaux de commande (133), à des valeurs de distance (Dr) inférieures à la valeur de distance limite (Dlim).

9. Procédé selon la revendication 8, incluant une phase d'alarme, dans laquelle l'unité de contrôle (13) génère une notification à l'utilisateur lorsque la distance (Dr) d'au moins un corps est inférieure à une valeur de distance limite (Dlim).

10. Procédé selon la revendication 8 ou 9, incluant une étape de variation de la valeur de distance limite (Dlim), dans laquelle l'unité de contrôle (13) fait varier la valeur de distance limite (Dlim) sur la base de la catégorie par défaut (CP) associée à chaque corps.
